Europäisches Patentamt

European Patent Office

Office européen des brevets

(19)

(11) Publication number: **0 121 929 B1**

## EUROPEAN PATENT SPECIFICATION

(12)

(45) Date of publication of patent specification: **03.07.91**  (51) Int. Cl.⁵: **B22C 9/06**, B29C 33/00, B28B 1/26

(21) Application number: **84103966.2**

(22) Date of filing: **09.04.84**

(54) Permeable mold.

(30) Priority: 09.04.83 JP 62784/83
22.04.83 JP 71259/83
11.05.83 JP 80943/83
10.02.84 JP 23856/83

(43) Date of publication of application:
**17.10.84 Bulletin 84/42**

(45) Publication of the grant of the patent:
**03.07.91 Bulletin 91/27**

(84) Designated Contracting States:
**AT BE CH DE FR GB IT LI LU NL SE**

(56) References cited:
BE-A- 628 328      CH-A- 617 914
FR-A- 2 457 753    US-A- 2 841 823
US-A- 4 125 351    US-A- 4 307 867
US-A- 4 425 411

(73) Proprietor: **SINTO KOGIO, LTD.**
**No. 7-23, Meieki 4-chome**
**Nakamura-ku Nagoya-shi Aichi-ken(JP)**

(72) Inventor: **Yanagisawa, Akira**
**No. 481-1, Aza-Nishihara Miyashiro-machi**
**Minami-Saitama-gun Saitama-ken(JP)**

Inventor: **Noguchi, Hiroyuki**
**No. 34-2-1009, Senjumotomachi**
**Adachi-ku Tokyo(JP)**
Inventor: **Nakagawa, Takeo**
**No. 223-4, Ichinotsubo**
**Nakahara-ku, Kawasaki-shi**
**Kanagawa-ken(JP)**
Inventor: **Inagaki, Takehiro**
**No. 122, Suwa-machi, 3-chome**
**Toyokawa-shi Aichi-ken(JP)**
Inventor: **Hayashi, Yoshikazu Dai-2 Kyowa-sou**
**Mansion 403 No.32-11 7-chome, Toyosato**
**Higashiyodogawa-ku Osaka-shi, Osaka(JP)**
Inventor: **Tsuchida, Masanobu**
**No. 80, Aza-Nashikogi, 9-chome**
**Motojuku-machi Okazaki-shi, Aichi-ken(JP)**
Inventor: **Fuma, Toyoji**
**No. 57-1, Chubu-machi**
**2-chome, Toyokawa-shi Aichi-ken(JP)**

(74) Representative: **Heusler, Wolfgang, Dipl.-Ing.**
**et al**
**Dr. Dieter von Bezold Dipl.-Ing. Peter Schütz**
**Dipl.-Ing. Wolfgang Heusler Brienner Strasse**
**52**
**W-8000 München 2(DE)**

Rank Xerox (UK) Business Services

## Description

This invention relates to a method of preparing a permeable mold for forming three-dimensional shapes, and relates further to a permeable mold fabricated according to the method.

For manufacturing products of three-dimensional shapes or semi-products of metal, plastic, ceramics, rubber, glass or their composites, it has been widely practised to put liquid, slurry or softened materials into the cavity of a mold with or without pressure, or under reduced pressure.

It is desirable that the mold complies with following requirements:

1) The mold should have the strength and durability as required in various cases of application.

2) The mold should have good translation or copying properties and be adapted for products of complicated shapes or for relatively thin products.

3) The cavity of the mold should be effective in removing air, gas, water and others in order to avoid pin holes or porosities in the surface or interior of the products or uneven thickness.

4) It should be easy to make large molds for big sized products.

5) The production of the mold should be easy and economical.

No mold was ever realized which would meet all of these requirements.

For example, durable metal forms or dies are used for forming cast metal such as aluminium alloy. They may satisfy the above requirements (1) and (2) but not the requirements (3), (4) and (5). Especially, the die casting process where the molten metal is poured into the cavity under pressure and at high speed may result in porosities due to the mold not being permeable. Therefore problems arise when the products require air tightness or when heating treatment or surface treatment are performed after casting.

A durable mold for producing cubic articles of plaster or rubber is prepared with a metal form which in general consists of a pair of stationary and movable parts into which liquid or softened material is poured and to which predetermined pressure is applied by means of the metal form itself of by the fluid. However, also in this case, since the air within the cavity or the air involved in the raw material could not be expelled, the condition (3) would be hardly expected, so that there arise problems with regard to the quality of the products, or it takes much time for removing burrs created by applying high pressure. Thus, the conditions (4) and (5) could not be satisfied.

A typical process of forming plastics is carried out under vacuum. This vacuum process comprises, as known, fixing a plastic sheet of thermal plasticity to a frame, heating and thereby softening the plastic sheet, removing the air from the frame via the mold positioned under the frame, and adhering the plastic sheet to the surface of the mold. Recently, rugged patterns were produced by "leather embossing" on the surface of the products for increasing the products value. The leather embossing became more and more complicated.

The vacuum forming die is conventionally realized by wooden, plaster, resin or metal molds. The wooden mold is often cracked by the repetition of rapid heating and rapid cooling. The plaster mold is weak in strength and rough on the surface and subject to rapid wearing while its surface becomes burnt plaster and delaminated. The resin type is also weak in strength and heat resistance, and, in addition, more expensive than the former types as the production of such molds is time-consuming. Therefore they could not satisfy all of the conditions (1) to (5) concurrently, and they are not suitable for mass-production.

For these reasons, metal molds are in general employed for the mass-production. The metall mold has excellent properties as to endurance, precision and accuracy and meets the conditions (1) and (2), but it is difficult to form the necessary vents which are inherent in the wooden, plaster and resin types. The vents of the vacuum forming die are limited with respect to diameter or pitch so that there arise problems when as many concave and convex elements are present as required in the leather embossing process, or when the sheet is thin and the air absorbing vents must be small correspondingly. Therefore, the absorbing ability or, in other words, the adhesion of the sheet is not satisfactory and there may be disorder of the sheet being drawn on the mold surface, uneven thickness, wrinkles at the corner portions or other faults due to the irregularity of the air absorption. Moreover the metal mold is produced by a time-consuming electric casting process which requires high technical skill, and could not meet the conditions (4) and (5).

Plaster molds are generally used for forming ceramics or earthernware. Water in the mixture of ceramics and slurry (known as "slip") is absorbed via the porosities of the plaster. However, the plaster is inferior in strength and wear resistance as mentioned above, and is soon cracked at the corner portions. Further, the plaster tends to chemical reactionwith the slip. Its endurance is low, and it can only be used some hundred times. It is difficult to perform forcible absorption because of the low endurance. Besides, the surface is rough and the quality of the finished products is often unsatisfactory.

Due to the low strength, it is also difficult to make large molds for products of large sizes. Furthermore if the water absorbing molds were dried at high temperatures, the burnt·plaster would turn out, and

2

delamination or exfoliation would be caused. The drying should be carried out at low temperatures during long times, and the manufacturing rate of the ceramic products is reduced. None of the above-mentioned conditions could be met.

In general it may be said that molds with permeability characteristics are poor in endurance, and molds having the required endurance such as the metal molds are inferior in permeability.

From BE-A-628 328 is known a method of preparing a permeable mold for forming three dimensional shapes which comprises preparing a mixture of metallic grains, ceramic grains and an evaporating phenolic resin, pressing the mixture at high pressures into a predetermined shape and sintering the mold. The mold prepared according to the known method suffers from some disadvantages: Since the mold has to be pressed at high pressures before sintering, the mold can not be used for producing products of complicated shape; for preparing a specific form, the sintered mold material has to be subsequently processed causing high costs; so the mold according to the known method is regarded as a permeable mold, an evacuation of the mold without pinholds or a removal of water through the mold hardly can be realized because according to the known method no open porosity can be achieved for satisfying the requirements of easily evacuating the forming surface or removing water through the mold.

The present invention provides a new and practical forming mold in which all the above-mentioned requirements are satisfied, and the inconveniences of the conventional products are overcome. More precisely, it is a first object of the invention to provide a method according to claim 1 for preparing a permeable mold having the required permeability as well as satisfactory strength, wear resistance and endurance for permitting the mold to be used repeatedly many times. The permeability should be achieved over the entire mold surface without the necessity of any special process, so that air, gas, water and other components present in the cavity and the forming material may be removed effectively, and sheet like forming material may be air-tightly adhered to the mold surface. The mold should be smooth and elaborate in spite of the permeability all over the surface, and it should have good copying properties so that it is possible to manufacture thin products of complicated shapes by an easy process and at low cost.

It is a second object of the invention to provide a permeable and durable mold, which is excellent in chemical stability, heat resistance or corrosion resistance, and which is especially suitable for forming ceramics, plastics or the like.

It is a particular object of the invention to provide a permeable and durable mold which has high mechanical strength, especially bending strength, and satisfactory dimensional stability.

For accomplishing these objects, the invention proposes a method according to claim 1 for preparing a composite sintered product, comprising aggregates of metal powders and ceramics to which a bonding material containing an evaporable substance is added, adapted to be burnt.

The composite sintered product is made by pouring a slurry of the bonding material containing the evaporable or inflammable substances mixed with the aggregates at a specific weight ratio into a frame carrying a product sample or a finished model, molding and shaping said material, drying it and sintering the dried substance in an oxidizing atmosphere. The weight ratio of the metal powders : ceramics powders : binder may be = (1-5) : (1-5) : 1.

The composite sintered product has a body including a close or dense layer containing scattered metallic oxides. The hardened layer may form the entire body, or it may be a shell of a certain thickness over the outer surface while an internal part may be a backing layer composed of a non-sintered mixture in which metallic oxides are scattered.

The composite sintered product is porous because the vaporous or inflammable substance in the binder passes through the hardened layer and, if any, the backing layer and escapes from the surface of the mold, so that countless fine open pores of micron size are formed. The entire mold has a porosity of at least 5% by said open pores, and a compression strength of more than 100kg/cm² by the shell effect of the hardened layer.

The metallic powders may be ferrous or non-ferrous powders. For the former, cast iron powder, pure iron powder, electrolytic powder or steel powder are selected, and for the latter, one or more are selected from Ni powder, Cr powder, Mn powder, Mo powder, Ti powder, Cu powder, Co powder or W powder. Each of them is sintered under a predetermined condition of mixture with ceramic powder, and the hardened layer is formed so that a binding diffusion combination takes place at the interface between the metallic powders and ceramic powders.

A mold according to the invention may be further characterized in that a body thereof comprises a composite sintered substance including metallic powders, ceramic powders and reinforcing fibers. The composite sintered substance forms the hardened layer and also includes, if any, the non-sintered mixture within the hardened layer. The ceramics is scattered with the metallic oxides and the reinforcing fibers. The strength of the mold is improved by the bridging action of the reinforcing fibers, and they prevent any deformation of the mold.

The reinforcing fibers are added at an amount not more than 20 vol% for the mixture of the binder with the metallic powders and the ceramic powders and including evaporable or inflammable subtances.

The casting may be carried out without pressure (non pressure-absorption forming mold) by pouring into the cavity under gravity a liquid material which may be molten glass, molten plastic or molten metals such as Al or its alloys, Zn or its alloys, Mg or its alloys, Cu or its alloys, normal cast iron, or ductile cast iron, and forming the material by action of external absorbing force. According to another casting possibility (pressure-absorption forming mold) liquid material is poured into the cavity under pressure and formed by the action of external absorbing force.

There is a further forming possibility according to which softened lump material such as rubber, glass, plastic metal or the like is put into the mold and pressurized to effect plastic flow, and the forming of the material is effected by external absorbing force.

Furthermore, the mold may be used for vacuum forming of plastics, the absorbing force acting on softened sheet material for copying patterns carved in the mold surface. Otherwise it may be used for blow forming of plastics, where internal pressure acts on a bag like sheet till expansion to press the plastic to the mold surface. In addition, it may be used as a mold which absorbs water from the slurry material (slip) poured in the cavity when ceramic products are obtained as mortal, refractory or earthenware.

Many other features of the invention will be apparent from the following description of the invention.

Figs. 1 and 2 are cross sectional views showing a basic embodiment of the invention,

Figs. 3 and 4 are cross sectional views showing a mold having reinforcing fibers,

Fig. 5a and Fig. 5b are enlarged cross sectional views showing outlined structures of the mold of the invention,

Fig. 6 is a cross sectional view showing an embodiment of a casting form,

Fig. 7 is a perspective view of a lower part of the casting form of Fig. 6,

Fig. 8 is a perspective view showing the application of the invention to a vacuum forming die,

Fig. 9 is a cross sectional view of the above,

Fig. 10 is a cross sectional view showing application of the invention to a water absorption molding die for ceramics,

Fig. 11 is a cross sectional view showing an embodiment applying the invention to blow molding,

Fig. 12 is a cross sectional view showing an embodiment applying the invention to a plastic flowing mold,

Fig. 13 to Fig. 15a and Fig. 15b are cross sectional views showing a process of manufacturing a forming mold of the invention,

Fig. 16 is a cross sectional view showing an embodiment applying the invention to a pouring-absorbing form for molten material not under pressure,

Fig. 17 is a cross sectional view showing one example of an apparatus to be used in Fig. 16,

Fig. 18 is a side view, partially in section, showing an embodiment applying the invention to a pouring-absorbing form for molten material under low pressure.

Fig. 19 is a cross sectional view showing an embodiment appyling the invention to an absorbing form under pressure in accompany with plastic flow,

Fig. 20 is a cross sectional view showing an embodiment applying the invention to a vacuum forming die,

Fig. 21a to Fig. 21d are cross sectional views showing an embodiment applying the invention to blow molding,

Fig. 22a and Fig. 22b are cross sectional views showing an embodiment applying the invention to slip casting,

Fig. 23 is a graph showing the relation between compression strength and sintering time of a forming mold using ferrous powders as metallic powders,

Fig. 24 is a graph showing the relation between compression strength and sintering time of a forming mold using non ferrous powders as metallic powders,

Fig.25 is a graph showing relation between compression strength and sintering temperature of products using ferrous powder as metallic powders,

Fig.26 is a graph showing relation between compression strength and sintering temperature of products using non ferrous powders as metallic powders,

Fig.27 is a graph showing relation between sinterming time and increase of weight of a product,

Fig.28 is a graph showing bending strength of products where reinforcing fibers were added to ferrous powders,

Fig.29 is a graph showing bending strength of products where reinforcing fibers were added to non-ferrous powders,

Fig.30 is a graph showing relation between amount of adding fibers and amount changing sizes of products where reinforcing fibers were added to ferrous powders,

Fig.31 is a graph showing relation between amount of adding fibers and amount of changing sizes of products where reinforcing fibers were added to non-ferrous powders,

Fig.32 is a graph showing relation between porosity and mixing ratio (binder: aggregate),

Fig.33 is a graph showing relation between mixing ratio of aggregate and compression strength,

Fig.34 is a graph showing relation between sintering time and porosity and thickness of hardened layer using ferrous powders,

Fig.35 is a graph showing relation between sintering time and porosity and thickness of hardened layer using non-ferrous powders,

Fig.36 is a graph showing translation of forming mold using ferrous powders, and

Fig.37 is a graph showing translation of forming mold using non ferrous powders.

DETAILED DESCRIPTION OF THE INVENTION

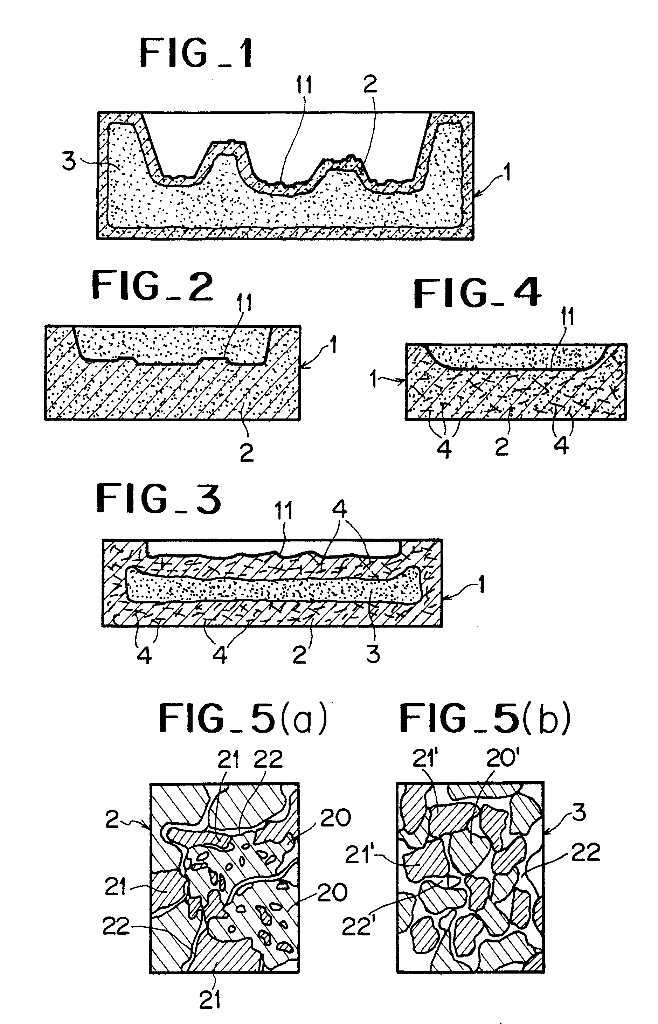

Figs.1 and 2 show basic structures of a permeable and durable mold according to the invention, which is composed of a composite sintered body 1 where metallic powders and ceramic powders are aggregates. The body 1 has a fine hardened layer 2 on an outer shell including at least a model surface 11. The hardened layer 2 goes to a center part of the mold as shown in Fig. 2, so that the entire body may be composed of the hardened layer, or the hardened layer 2 does not go to the center part as shown in Fig. 1, so that a backing layer 3 may be formed which is composed of non-sintered mixture of the metallic powders and the ceramic powders at the inner side of the hardened layer.

Figs.3 and 4 show another embodiment of the permeable and durable mold according to the invention, which is composed of the composite sintered body 1 where the metallic powders, the ceramic powders and reinforcing fibers 4 are aggregates.

The composite sintered body 1 shown in Fig. 3 has, similarly as in Fig. 1, the backing layer 3 composed of the hardened layer 2 whose outer side is close, and the non-sintered mixture at the inner side of the layer 2, in which the reinforcing fibers are almost uniformly scattered in the hardened layer 2, the backing layer 3 and in boundary between them, and the scattered fibers 4 strengthen the structure of the non-sintered mixture composing the backing layer 3, and bridge between said two layers 2 and 3, thereby to increase adhesion of these layers.

In the embodiment shown in Fig. 4, the entire mold is composed of the hardened layer 2, and the reinforcing fibers 4 are scattered all over the body.

The hardened layer 2 comprises joined structure of dispersed granular oxides 20 of the metallic powders and the ceramic powders 21 as shown in Fig.5(a). Generation mechanism of the hardened layer 2 is not always apparent, but it is considered that in general the metallic powders are oxidized to increase the volume and sintered as they wrap the ceramic powders, while on the other hand sintering of the ceramic powders advances, and are joint as diffusion conjunction takes place at interface with the ceramic powders. The hardened layer 2 has on its surface and in its inner side fine (0.1 to 50$\mu$m but in average 5 to 20 $\mu$m) and countless open bores 22 which are formed in that substances in the sintered materials get out via the sintered surface from its inner part. By the fine open bores 22, a close and smooth surface is formed notwithstanding porosity.

The backing layer 3 in the inner side of the hardened layer 2 comprises mixture of the metallic powder 20' not sintered and the ceramic powders 21' as shown in Fig.5(b). In the interfaces of the metallic powders 20', rough open bores 22' are formed together with disappearing of the binder. The bore 22' communicates with the open bore 22 of the hardened layer 2, so that the composite sintered body 1 has the porous permeable structure. The both bores 22 and 22' are characterized in that they are not cracks. The porosity depends upon later-mentioned mixing conditions, sintering conditions and others, but in general are between 5 and 60%, and the composite sintered body has a compression strength of about 100 to 900Kg/cm$^2$ or more.

Herein, for "metallic powders", ferrous metallic powders, non-ferrous metallic powders, their mixture or alloyed powders are used.

Ferrous metallic powders are iron powder or steel powders or cast iron powder, electrolytic powder or pure iron powder. The cast iron powder has a merit of accelerating formation of open bores by combustion of free carbon when sintering. For the cast iron powders, gray cast iron, ductile cast iron or alloyed cast iron may be used, and the alloyed cast iron improves the heat resistance and corrosion resistance.

Non-ferrous metallic powders are almost all of Ni, Cr, Mn, Mo, Ti, Cu, Co and W powders. They may be used as sole or mixture of more than two, alloyed powders or composite powders. If necessary, Zn, Sn or Pb powders may be employed, but they lower characteristics of strength and heat resistannce.

Since the ferrous metallic powders are cheap, they are often used, but the chemical stability of oxides is poor, and therefore if very little ferrous rusts are not allowed, non-ferrous metallic powders should be used. If non-ferrous metallic powders are appropriately selected, the strength is heightened, the heat resistance and corrosion resistance are increased, and sizing precision or surface property are improved. Colour phase is pretty and the product value is heightened. For example, if high strength is required in the product, Cr powder is suitable. If the heat resistance and corrosion resistance are required, Cr, Ni and Mo powders are effective.

For "ceramic powder", such substances which are low in deformation at high temperature and easy to join the metallic powders are selected. For example, they are neutral substances which are represented by mullite, sintered alumina, active alumina, fused cast alumina, chromite or silimite, or acidic substances which are represented by fused silica, zirconia or fused zircon. They are in general suitable, but basic sustances may be used which are represented by magnesia. When the binder is such as silica sol, and since it is stable in pH 2 to 4, a neutral or acidic heat resistance powder is suitable.

For "reinforcing fibers", steel materials are proper. Especially, stainless steel fibers are not corroded during the sintering process, since its reinforcing effect is high against the hardened layer and the backing layer. The reinforcing effect is obtained by other reinforcing fibers, for example, ordinary steel fibers such as free cutting steel, glass fiber, ceramic fiber as alumina fiber, and carbon fibers. They serve prevention of cracks and of dropping ceramic powders. The glass fiber is satisfactory in adhesion with the binder, and useful when ferrous oxides are extremely prohibited.

It is preferable that diameter of the metallic powder not sintered is 2 to $500\mu$m at the maximum, and that of the ceramic powder is 10 to $300\mu$m. Ferrous powder, especially cast iron powder is appropriate in 50 to $500\mu$m. Reason for determining the lower limit is that the smaller is the diameter, the more preferable is the powder in view of the translation and surface roughness of the model, but such conditions easily invite cracks. Reason for determining the upper limit is that the mold is deteriorated by excessive porosities. Thus the diameter is appropriately selected between the upper and lower limits in accordance with usage of the forming mold and using conditions (the surface roughness etc).

The reinforcing fibers are selected between 0.05 and 30mm in length and 5 and $400\mu$m in thickness (conversion into diameter). The stainless steel fibers or steel fibers are preferable products directly obtained from blocks by self-vibration machining, but may depend upon other methods.

When adding the reinforcing fibers, the amount is changed by the properties or sizes, but about 1 to 20vol%. If being less than 1 vol%, effects of strength and stability of size could not be expected. If being more than 20vol%, fiber balls are easily formed, irrespectively of the fiber properties, and forming ability is lowered. Further, the precipitation to the surface of the hardened surface is excessive, and such addition is disadvantageous in cost. If the asbesto ratio of the stainless steel is large, the upper limit is 10vol%. If the asbestos ratio is small, for example, the glass fiber is 0.03mm in thickness and 0.1mm in length, addition may be allowed up to about 20vol%.

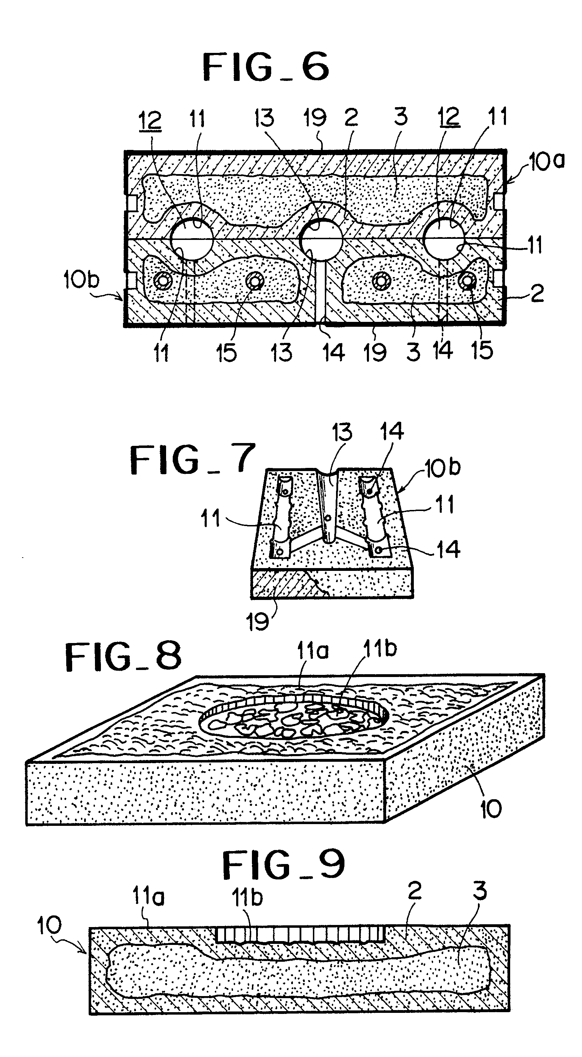

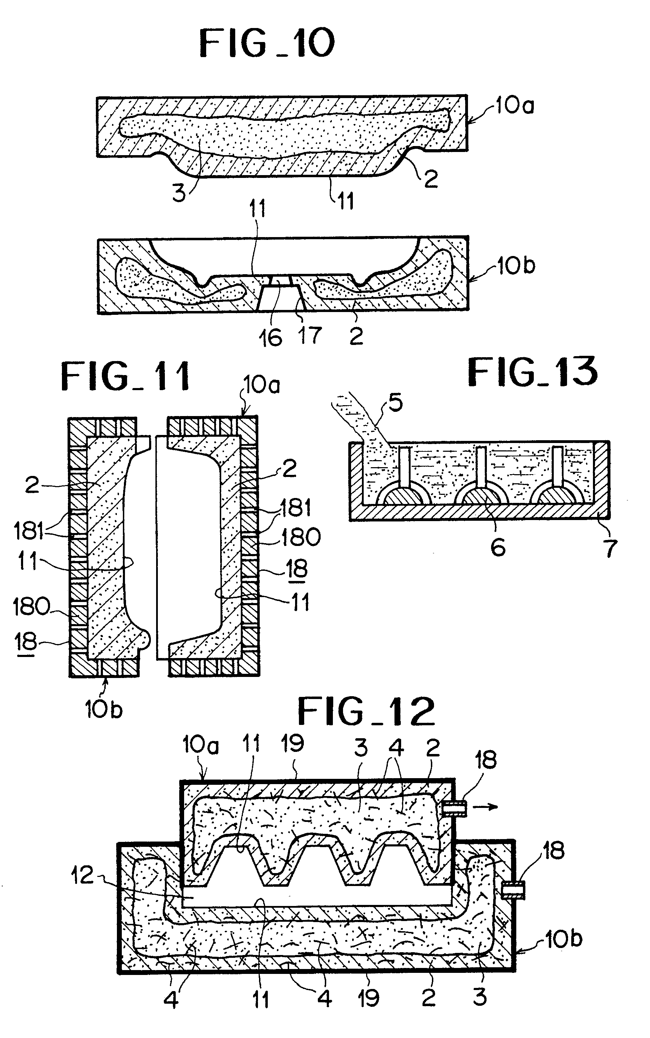

Figs.6 and 12 show embodiments of the invention. Figs.6 and 7 apply the invention to the absorption casting mold where the molten material is poured under non-pressure or pressure and negative pressure is served within the cavity until solidification. The mold is divided into one mold 10a and the other mold 10b, and the both are composed of composite sintered products where the aggregate is the metallic powders and ceramic powders.

In this embodiment, the composite sintered body is formed with sintered and close hardened layer 2 on the outer surface, while backing layer 3 of non sintered mixture is formed on an inner side of the layer 2, and the both mold 10a, 10b are defined with cavities 12 by means of mold faces 11. The mold faces 11 and a passage 13 are structured with the hardened layer, and pin holes 14 for taking out the products pass through the hardened layer 2 and the backing layer 3. Conduits or heaters 15 are buried in the layers 2 and 3 for cooling or keeping the model warm as required.

Figs.8 and 9 show an embodiment applying the invention to a vacuum forming die which is widely used for the plastic sheet. A die 10 is composed of composite sintered body where the aggregate is the metallic powders and the ceramic powders. The composite sintered body is formed with close hardened layer 2 on an outer shell, and in the inner part of the hardened layer 2 the backing layer 3 is formed which is composed of non-sintered mixture powders. The hardened layer 2 is defined with a first mold face 11a comprising a leather embossing pattern and a second mold face 11b of relief pattern, and these two faces make an absorption mold . The mold face is not limited to this embodiment but optional, and may be defined on either the male or female dies.

Fig.10 shows an embodiment applying the invention to an absorption mold for slurry material, for example, a slip casting mold for earthenware or porcelain, which comprises two mold 10a, 10b having mold faces 11 forming the cavity. The both mold 10a, 10b are composed of the composite sintered body of the metallic powders and ceramic powders, and have the hardened layer 2 on the outer shell including at least the mold face. The mold 10b is defined with a passage 16 communicating with the face 11 and a vent 17 larger than the passage 16, and is provided with a conduit for feeding the "slip" to the vent 17.

Fig.11 shows an embodiment applying the invention to a which expells the air within the cavity when forming as represented by a blow forming mold of plastic film or sheet, which is composed of two divided molds 10a, 10b defined with mold faces 11 to imprint shapes or patterns when the plastic sheet or film is of bag shape. The mold of this embodiment is made of the metallic powders, ceramic powders and composite sintered body, and the shown one comprises the hardened layer 2.

Fig.12 shows an embodiment applying the invention to a die which subjects softened or semi-molten lump material to pressure in order to cause plastic flow into a determined shape and act absorption force thereon concurrently. The die of this embodiment is composed of the two divided molds 10a,10b which are formed with mold faces 11 to provide a cavity 12 of determined size. The present embodiment has the backing layer 3 as the inner layer of the hardened layer 2 of the outer shell, and the reinforcing fibers are dispersed in the hardened layer 2 and the backing layer 3.

In Figs.6 and 12, since the mold is permeable as a whole, absorbing portions may be desired positions. For example, in the embodiment shown in Fig.11, the circumference of the molds 10a,10b except the mold face is protected with a cover or box 180 having vents 181, so that the whole body is made absorbing part 18. As seen in Figs.6 anf 12, the absorbing parts 18 may be provided at one or a plurality positions of the molds 10a, 10b. In such a case, filling means 19 such as filling paint, air-tight material or casing may be applied to the outer surface except the absorbing parts. Figs.6 to 12 of course illustrate examples of this invention to which the structure shown in Figs.1 to 4 can be applied where the whole body or the mold is the hardened layer 2 and the reinforcing fibers 4 are dispersed. In the above mentioned embodiemnts, the both divided molds 10a, 10b are composed of the composite sintered material and permeable, but such preparations may be made to either ones.

The permeable and durable mold shown in Figs.1 to 12 may be produced via step of mixing and kneading the aggregates and binder to make slurry material, step of pouring the slurry and molding it into a desired shape, step of drying the shaped body, and step of sintering the dried one in an oxidizing atmosphere.

The step for making the slurry comprises fully mixing and agitating the metallic powders and the ceramic powder, and the reinforcing fibers which have been selected in accordance with using aims, and adding the binder containing substance which will evaporate or consume after having been formed.

Herein, "binder containing evaporating or consuming substance" refers to such substance where the metallic grains and ceramic grains are joined, and which is used to form fine air holes.

A typical binder containing the evaporating substances is silicon compound, especially silica sol (colloidal silica): $SiO_2 \cdot nH_2O$. Silica sol is a stabilized colloid solution of silica. For example, $SiO_2$ of 20 to 21% density, $Na_2O$ of less than 0.02% density, pH 3 to 4, viscosity ($20°C$) of less than 3cP, specific gravity ($20°C$) of 1.10 to 1.16. In this case, evaporation of the water forms porosity.

Especially suitable binder in the invention is organic silicate binder, especially alcholic solvent silica sol based on ethyl silicate. Ethyl silicate is compound of low condensate of ethyl ortho silicate, and oil solution where main content is about 4 to 6 volume, 40 to 42% available silica, specific gravity ($25°C$) of 1.04 to 1.07 and viscosity ($25°C$) of 2.6 to 4.2cps. Sole ethyl silicate is stable substance without binding property. The binding property is effected by mixing alchol solvent and water in ethyl silicate and electrolyzing the mixture. Alchol solvent is mainly ethanol or isopropanol, and acidic substance (hydrochloric acid, phosphoric acid, oxalic acid) is added as catalyst for acceleration of reaction and stabilization of silica sol. Mixture is ethyl silicate of 80 wt part, alchol solvent of 13 wt part, water of 6 wt part, and catalyst of 1 wt part. Silica sol of 20% silica density is obtained by ethyl silicate of 50 wt part, alchol solvent of 43 wt part, water of 6 wt part and catalyst of 1 wt part. Silica density of 21 to 31% is obtained by regulating ethyl silicate of 55 to 75 wt part, alchol solvent of 15 to 33 wt part and water of 7 to 11 wt part. Obtained silica sol of alchol solvent is colorless and transparent liquid of 23 to 25% non evaporating substance ($110°C$), specific gravity ($25°C$) of 0.92 to 0.93 and viscosity of more than 4cps.

For the binder containing the consuming substance, those resins may be used which are hardened at room temperatures such as urethan resin, polyester resin, epoxy resin, and preferably those which are changed into low viscosity by the solvent. To other binders known material represented by water glass may be added in appropriate amount.

The mixing ratio of the metallic grains, ceramic grains and binder is preferably (1 to 5) : (1 to 5) : 1 in weight ratio, and the most recommended is 2 : 2 : 1 to 5 : 5 : 1. This mixing ratio is determined for obtaining characteristics in balance such as strength, permeability, heat conductivity or surface property. The lower limit of 1 : 1 : 1 is set because this extent is necessary to obtain available at least strength as the forming mold . The upper limit of 5 : 5 : 1 is set because if the aggregates are too much for the binder, a covering power of the binder is decreased so that strength is lowered and inferiority of stability of the mold surface is caused. The upper limit of the metallic grains is set because if the metallic grains are excessive though the mixture of the ceramic grains and the binder is appropriate, the strength will be unsatisfactory, and the porosity becomes higher unnecessarily, and further the surface property is deteriorated to spoil the translation which is important to the forming mold . The upper limit of the ceramic grains is set because the strength is lowered by the excessive addition. The binder is necessary to joining of the aggregates, and also necessary to providing the permeability. Excessive addition would bring about to make the sintered body too much porous and weaken the strength.

A next reference will be made to process of forming desired shapes of forming molds This process is undertaken by pouring the mixed substance of slurry prepared in the pre-stage, and solidifying it. For example, the mixed substance 5 is poured into a mold frame 7 arranged with a mold element 6 such as a design, master mold , actually formed product or the like, as shown in Fig.13, and is left in the air for a determined time. It is effective to add hardening agent for accelerating solidification, give vibration for assisting the filling property or squeez the substance. The shape or pattern of the mold element 6 may be exactly translated by desirable fluidity of the mixed material 5 and selection of the metallic grains and the ceramic grains of proper sizes. If pins or pipes are inserted within the frame 7 during forming the mixed material, pin holes 14 or the cooling or warming mechanisms 15 shown in Fig.6, or the absorbing parts 18 shown in Figs.6 and 12 are obtained.

Subsequently, the shaped body from the mold frame is dried in the air or by fire for preventing occurrence of cracks or strains, as well as evaporating the alchol or water contained in the binder so that permeability (air holes) is provided. In the former air drying, time is selected between 1 and 48 hr in accordance with the size, mold and others. The drying is speeded up by the atmosphere at high temperatures or hot blast. The latter fire drying is carried out by subjecting the shaped body to the fire directly to burn the evaporating materials.

The shaped body passing the drying process has permeability as a whole, and may be used as it is as a mold of non-pressure. However, the mechanical strength is low and the endurance is poor.

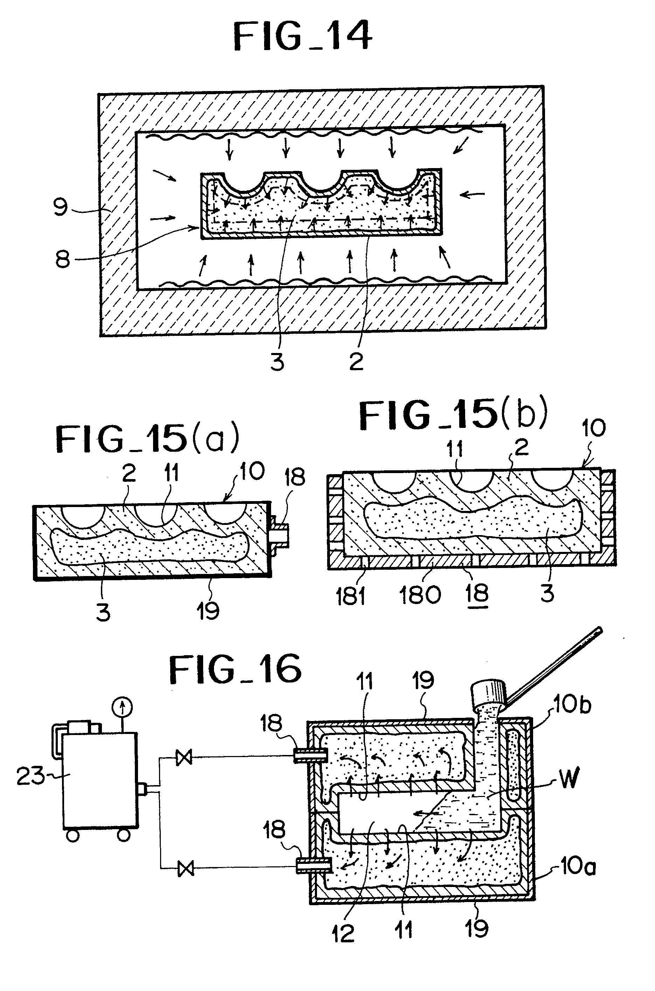

The invention charges the shaped material 8 after the drying process into a heating stove 9 as shown in Fig.14, and sinters it under oxidizing atmosphere by means of a heating source as a resistance heater or gas. The oxidizing atmosphere may be the air or oxygen enriched air where the oxygen supply is considered. The sintering condition depends upon the metallic powders, mixing ratio, size of the model, destined porosity and others, but in general the sintering temperature should be 400 to 1500°C and the sintering time should be more than 1 hour. The lower limits of the both are set because the sintering would be unsatisfactory and close hardened layer would not be produced and necessary strength and endurance would not be achieved The upper limit of the sintering temperature is 1500°C. Otherwise the hardened layer is formed but the surface is made rough so that the translation property is missed and the forms precision is damaged. When the metallic powder is ferrous, the upper limit of the sintering temperature is preferably about 1000°C, especially 850 to 950°C. The longer is the sintering time, the more rough is the surface and the productivity is lowered.

By the sintering process in the oxidizing atmosphere, the sintering of the ceramic powders in the shaped body and the sintering in oxidation of the metallic powders progress, and as seen in Fig.14 the hardened layer 2 grows toward the inner part from the surface of the body 8. At this time, the evaporating or consuming substances residing in the shaped body are burnt away so that the body is made porous. When the sintering process is completed, the filling means 19 is provided as in Fig.15(a) or the cover or box 180 is furnished as in Fig.15(b), whereby the permeable and durable forming mold comprising the composite sintered product is produced as shown in Figs.6 to 12.

The permeability (porosity) may be regulated optionally as paying attention to sorts of the metallic powders and ceramic powders, powder sizes, mixing ratio between the metallic powder, ceramic powder and binder, vibrating or squeezing conditions at pouring, the sintering conditions and the strength of the mold .

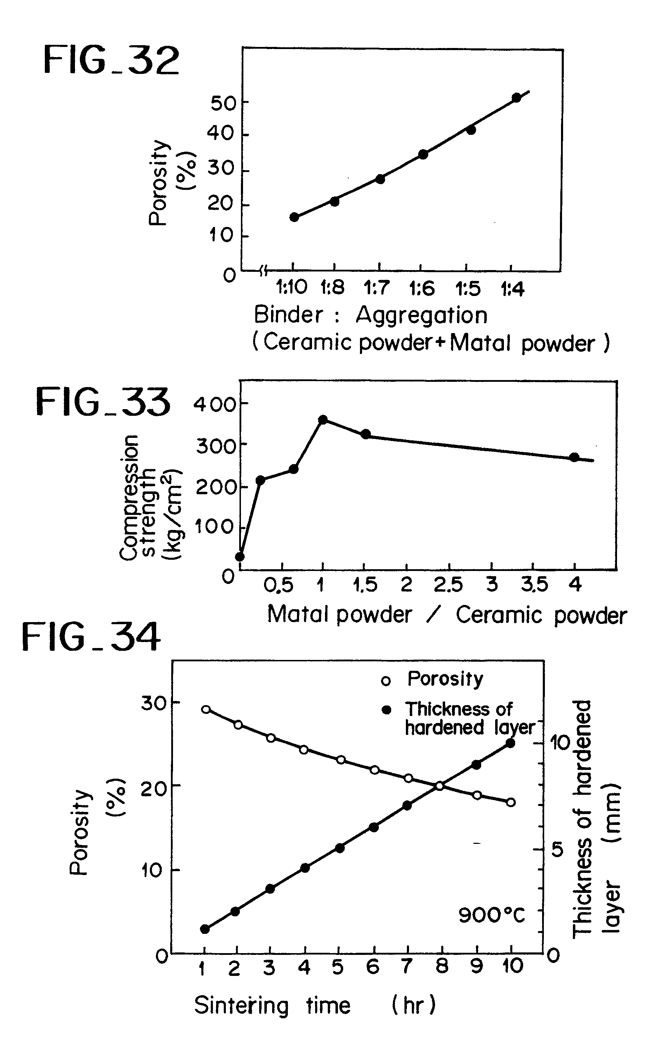

Fig.32 shows relation between the mixing weight ratio of the binder and the aggregates (metallic powders + ceramic powders) and the porosity. The data are the cast iron powders as the metallic powders (maximum diameter $100\mu$m), compound mullite powders (maximum diameter $100\mu$m), the ethyl silicate as the binder and the sintering condition of 900°C x 1hr. It is seen from Fig.32 that the porosity is heightened by lowering the mixing ratio of the aggregates. This fact may be applied to an experiment using non ferrous metallic powders as the metallic powders.

Fig.33 shows how the compression strength is influenced if the mixing weight ratio between the metallic powders and ceramic powder is changed while the mixing weight ratio between the binder and the aggregates is constant ( 1 : 5). The test pieces are 10mmø x 20mm, the material and the sintering conditions are the same as in Fig.32, and the metallic powders : the ceramic powders are prepared in six kinds of 4 : 1, 3 : 2, 2.5 : 2.5, 2 : 3, 1 : 4, and 0 : 5. It is seen from Fig.33 that the strength of more than 100Kg/cm$^2$ is obtained with respect to others than 0 : 5, and especially the equal mixture of the metallic powders and the ceramic powders brings about the most desirable strength. Others than 0 : 5 are all 35 to 50% in porosity, and the porosity is increased by increasing the metallic powders.

The products by the invention and services thereof will be referred to.

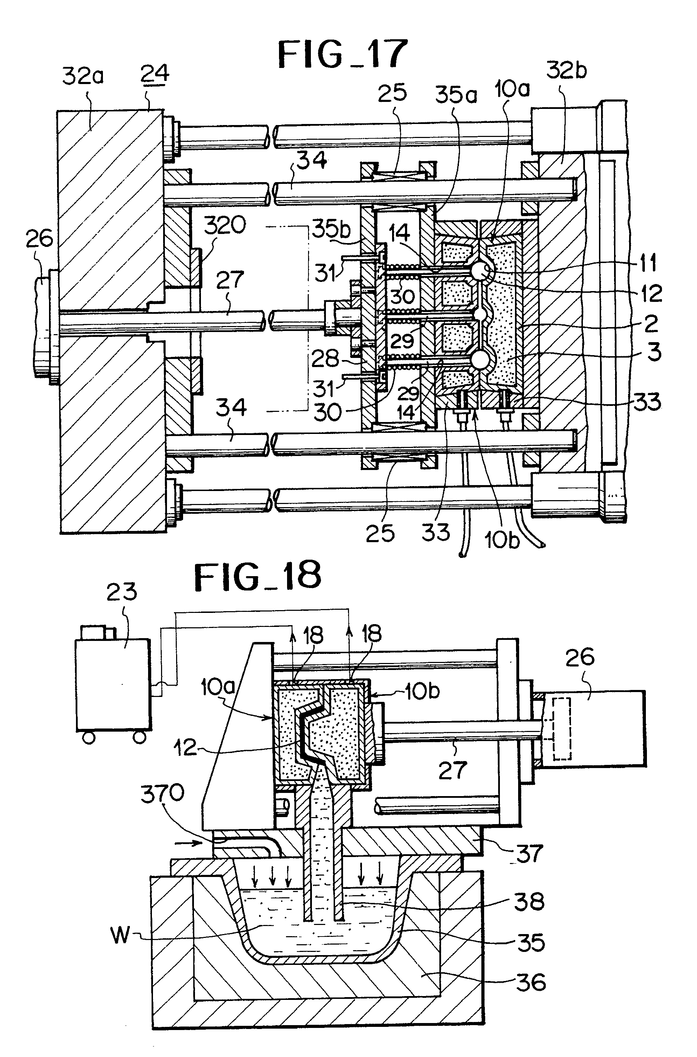

Figs.16 to 22 show the using conditions of the permeable and durable forming mold . Figs. 16 and 17 show the embodiment applying to the absorption forming cast under non pressure of molten metals as aluminium alloy, cupper or iron, the liquid or slurry maerial W as mortar, wax or refractory.

In this practice, one mold 10a is stationary and the other 10b is movable, and a medium such as mold separating agent or the like is coated on the mold faces 11 into which the material W is poured. In this invention, the stationary mold 10a and the movable mold 10b are in advance provided with absorbing parts 18 to communicate with a reduction pressure device 23 such as a vacuum pump via a hose so that the absoption is served from pouring of the material W.

A forming apparatus incorporating the forming mold is optional, and one example is shown in Fig.17. In this apparatus, a frame 24 is provided with stationary beds 32a, 32b, and one bed 32a is provided with a mold 10a by a frame body 33. The frame 24 is secured with guide rods 34 at both sides thereof. The guide rods 34 are inserted with two attaching plates 35a, 35b at their end parts, and the both attaching plates 35a, 35b are connected by spacers 25 such as roller bearings. One attaching plate 35a facing the stationary bed 32a is attached to another mold 10b via the frame body 33.

The other attaching plate 35b is connected at its rear side with a piston rod 27 of a cylinder 26 for opening the mold and equipped on the frame 24. The attaching plate 35b is provided with a movable plate 28 at its front side, which is fixed with ends of pushing pins 29, 29 corresponding to pin holes 14 of the mold 10b at the movable side. Around the pins 29 springs 30 are positioned to push the movable plate 28 to the attaching plate 35b. The movable plate 28 is implanted at its rear side with pins 31 projecting through the attaching plate 35b.

According to this structure, when the cylinder 26 is served to open the model from the casting condition, the pins 31 contact a front plate 320 of the stationary bed 32a, so that the movable plate 28 is moved to the front side of the plate 35, and the pins 29 are moved in the axial direction to separate the product from the mold face. It is possible to set exact releasing time from the mold and smoothly separate the product from the mold without subjecting partial loads.

Fig.18 shows an embodiment applying the mold of the invention to the absorption system of low pressure of the liquid or slurry material W represented by the molten metal.

In this case, the molds 10a and 10b as shown in Fig. 6 are used in place of the metal mold in the known casting apparatus of reduction pressure, and absorbing parts 18 are positioned at desired parts of the stationary mold 10a and the movable mold 10b. The absorbing parts 18 are, as seen in Fig.16, connected to the reduction pressure device 23, and the piston rod 27 of the opening cylinder 26 is connected to the movable mold 10b. Of course, the molds 10a, 10b may be supported by the frame body.

In undertaking the forming, the material W is charged in a crucible 35 and is molten in a stove 36, and the gas is introduced under pressure into the crucible 35 via a gas passage 370, so that the molten material is raised up into the cavity 12 of the molds 10a and 10b via a conduit 38, while the absorption power is activated through the absorbing parts 18, 18 by means of the reduction pressure device 23.

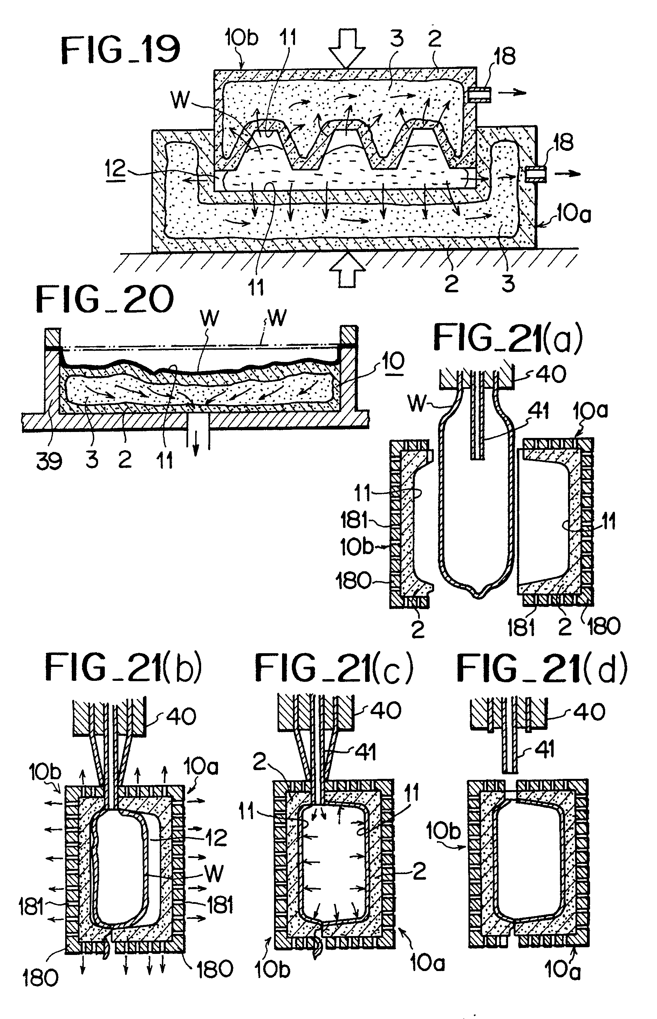

Fig.19 shows an embodiment where the mold shown in Fig. 12 is used, and pressure and absorption are performed on the semi-hardened or soften material W' to creat plastic flow, and the forming is practised.

In this case, the existing male mold comprising the metal is substituted with the forming molds 10a, 10b of composite sintered body according to the invention, and for example, the stationary mold 10a corresponding to the female mold is fixed to the side of the press bed, and the movable mold 10b corresponding to the male mold is provided to the side of the press slide, and the absorbing parts 18 are positioned at the desired parts of the molds 10a, 10b and communicate with the pressure reducing device (not shown). In undertaking the forming, the material W' is charged in the mold face of the stationary mold 10a, and the movable mold 10b is actuated to carry out the absorption, while necessary pressure is subjected to the material W'.

Fig.20 shows an embodiment applying the forming mold of the invention to a vacuum forming die of plastic sheet. It is no longer necessary to form absorbing vents. The mold 10 as seen in Figs.8 and 9 is provided within a frame 39 of a vacuum forming machine , and the plastic sheet W softened by heating is expanded over the frame 39, and pressure reduction is actuated on desired parts of the mold opposite to the mold face.

Figs.21(a) to 21(d) show an embodiment applying the invention to blow molding of plastic. In Fig.21(a), the two molds are composed of the movable molds, 10a, 10b. The forming material (parison) is in advance heated and softened, and is inserted into the movable molds 10a, 10b under the condition that a first expansion is given by the air blowing pipe 41 of the die 40. Subsequently, the material W is squeezed as shown in Fig.21(b). The air is injected into the material W by an air blowing pipe 41, so that the material is expanded and the air is exhausted to the outside through the hardened layer 2 and the backing layer if the latter is formed. The material W is adhered to the mold faces 11 . The die is removed as shown in Fig.21(d) and the matterial W is cooled by maintaining it for a certain period of time, and turns out a product W'. In the above process, the absorbing power may be acted externally during squeezing as shown in Fig.21(b).

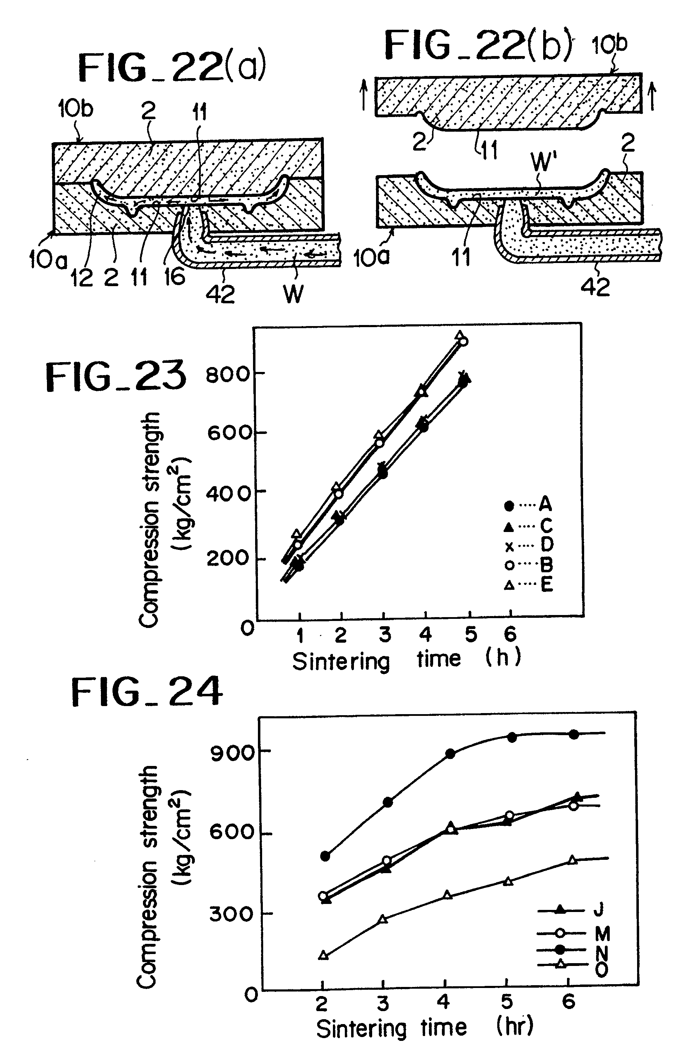

Figs.22(a) and 22(b) show an embodiment which uses the mold according to the invention as a slip casting mold into which the slurry material (slip) W is poured under pressure and the water is exhausted therefrom.

The mold is divided into the stationary mold 10a and the movable mold 10b, and the cavity 12 is constructed with these molds and the slurry material W is poured under determined pressure via a supply passage 42 and a path 16. By this pressure the air within the cavity 12 is exhausted to the outside through the air holes of the composite sintered product, and the water contained in the slurry W. The movable mold 10b is opened after a certain time to take out a product W'. Before or at the same time with pouring the slurry material W, the absorbing power is actuated from the outside as in Fig.21(b).

In the above processes, the forming molds 10, 10a, 10b comprise the composite sintered ones where the aggregates are the metallic powders and the ceramic powders. Since the outer circumference including the mold face 11 is formed with the hardened layer 2 where the metallic powders are oxidized, the strength is more than $100Kg/cm^2$ and has the necessary conditions such as wear resistance and heat resistance.

Therefore, cracks are not created by repetitions of rapid heating, rapid cooling or squeezing by means of the mold , and further the mold is not cracked at corners. Especially, if the reinforcing fibers are added, the bending strength is increased and sizing error is little.

Thus, the forming mold by the invention is higher in endurance than foregoing plaster molds or the resin molds If the mold is produced with the composite sintered body where the metallic powders and non ferrous metallic powders are used, the corrosion resistance of the metallic oxides is excellent with the chemical stabilization so that rust prevention is not necessary. Therefore, if it is used, for example, as the slip casting mold , the using cycles can be increased rapidly.

In addition to the excellent characteristics as the endurance mold , the hardened layer 2 and the backing layer 3 are composed of porous material including fine air holes 22, 22'. The air passing positions are not limited as in the metal mold and the entire body is of satisfactory permeability, that is, the whole surface of the mold face 11 has absorbing holes.

The hardened layer 2 forming the mold face 11 has the absorbing holes, but since they are very fine in size, the surface is close and not rough . The product is made by pouring the material (translation property good for surface elements), and in addition, the mold face per se has good translation property for the material W.

By carrying out the absorption from proper positions, or pressure from the interior of the mold as shown in Figs.21 and 22, the absorption can be actuated over the cavity and mold face so that the material can be filled or adhered to detailed parts. The air within the cavity and the water in the material are expelled concurrently.

The molds of the invention are low in heat conductivity in comparison with the metal mold , and if those are used for the casting of molten material, fluidity is smooth though the speed is low and the pressure is low. For these conditions it is easy to form products of complicated shapes or small thickness without pin holes or other defects in the surface and inner part.

If the present mold is used for vacuum forming, the absorption is actuated uniformly over the mold face, and the plastic sheet heated at determined temperatures is satisfactorily adhered to the mold face 11, and foregoing problems about the prior art can be perfectly removed which are flow of the surface squeezing, uneveness in thickness or wrinkles at coners. Especially, the absorbing holes are groups of fine air holes, and so the absorbing holes remain in the thin sheet, and since the holes are countless, the leather embossing patterns can be exactly represented.

Actual embodiments of the invention will be referred to.

EXAMPLE 1

I Ferrous powders were used as the metallic powders, and test permeable and durable forming molds were made for tests under the condition as shown in Table I. In this Example, the mixing weight ratio of the metallic powders and ceramic powders were equal.

Table 1

| Samples | Metallic grains (1) | | Ceramic grains (2) | | Binders (3) | Mixing wt ratio (1):(2):(3) | Reinforcing fibers | | |
|---|---|---|---|---|---|---|---|---|---|
| | Materials | Grain dia. (μm) | Materials | Grain dia. (μm) | Materials | | Materials | Size L x D | Addition (vol %) |
| A | Cast iron | <100 | Composite mullite | <100 | Ethyl silicate | 3 : 3 : 1 | - | - | - |
| B | " | " | " | " | " | 3 : 3 : 1 | Stainless steel | 7mm x 0.19mm | 1 to 4 |
| C | Pure iron | " | " | " | " | 4 : 4 : 1 | - | - | - |
| D | Cast iron | " | " | " | " | 2 : 2 : 1 | - | - | - |
| E | " | " | " | " | " | 2 : 2 : 1 | Stainless steel | 7mm x 0.19mm | 1 to 4 |
| F | " | " | " | " | " | 0.9 : 0.9 : 1 | - | - | - |
| G | " | " | " | " | " | 5.5 : 5.5 : 1 | - | - | - |
| H | " | 540 | " | 320 | " | 3 : 3 : 1 | - | - | - |
| I | " | <45 | " | <45 | " | 3 : 3 : 1 | - | - | - |

Note 1: Ethyl silicate is alcohol soluble silica sol of SiO$_2$ of 20% density and volatile matter of 80%

Note 2: Cast iron was ordinary cast iron of FC20 grade (3.0%C, 2.53%S, 0.43%Mn, 0.09%P, 0.05%S), and grains were obtained by crashing with hammer mill

Note 3: Stainless steel was obtained with self-vibration machining, and triangle in cross section. "D" was conversion value of the diameter.

Note 4: Grain sizes were the maximum except H. H is average diameter.

II Said material was uniformly agitated to make the slurry test material. This slurry was poured into the mold frame arranged with the pattern. After removing the products from the mold , Samples A, B, C, F and G were dried by subjecting to the fire for 0.5hr, and Samples D, E, H and I were dried in the air for 48hr.

Each of Samples was charged into the electric furnace of resistance heating, and sintered in the air atmosphere. Endurance molds with permeability comprising the composite sintered products were obtained.

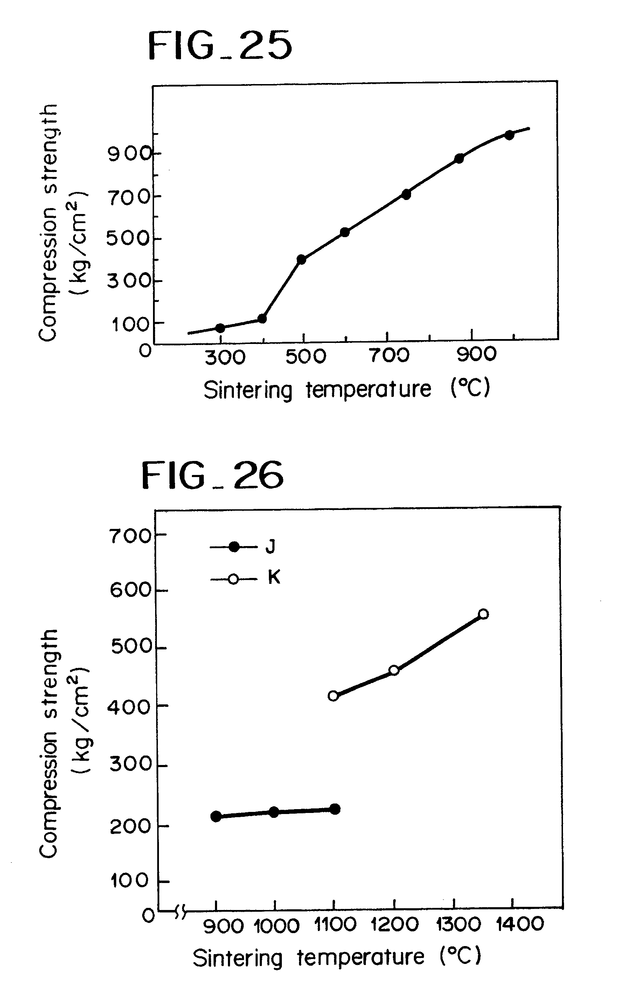

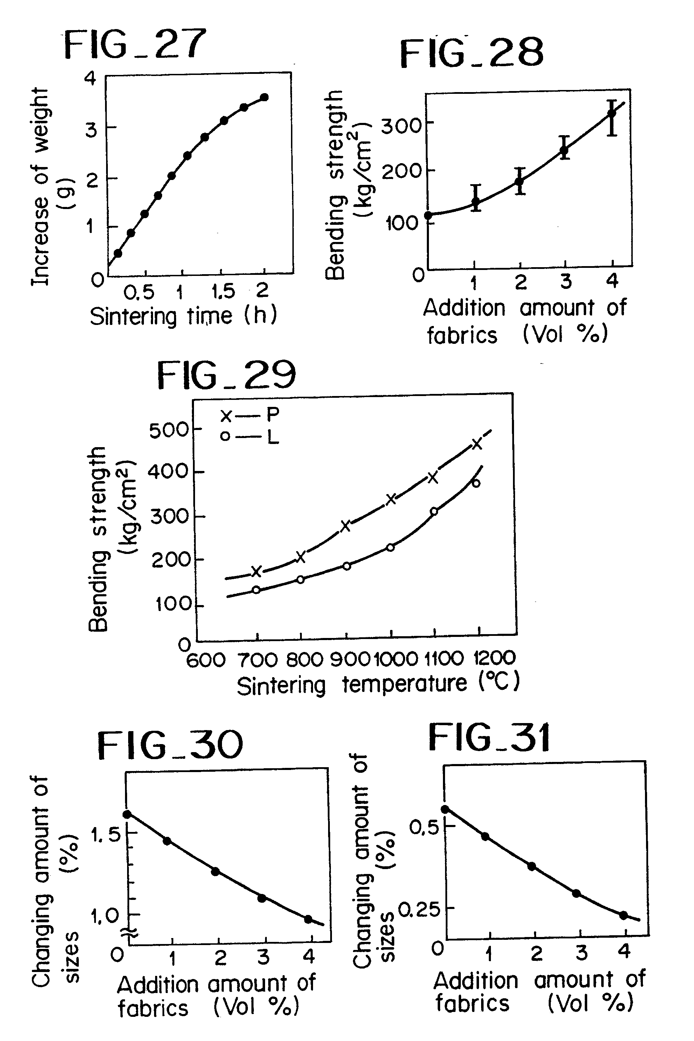

III The relation between compression strength and sintering time is shown in Fig.23, and the relation between compression strength and sintering temperatures is shown in Fig. 25. The relation between sintering time and changings of weight of the sintered articles is shown in Fig. 27.

The compression strength and weight increase as the sintering time advances and the sintering temperatures become higher. This is why the ferrous powders are oxidized, and the hardened layer is generated.

Samples F to I are comparative examples. In Sample F, the slurry material is low in viscosity, and the molding is easy, but since the binder is excessive, the porosity is too high as 70%, and the strength is below $100Kg/cm^2$. In the Sample G, the viscosity is too high, and the translation property is remarkably decreased. The pin holes could not be removed and the product is unsuitable. The grain size of Sample H is too large,so that the strength is less than $100Kg/cm^2$, and strain after sintering is large. The grain size of Sample I is too fine, and cracks are created, and the permeability could not satisfy 10%.

IV With respect to Sample B, the sintering time was 6hr, and the bending test was made on the product. The results are shown in Fig.28 and the test of changings of the sizes are shown in Fig.30. It is seen from Figs.28 and 30 that if the reinforcing fibers are added, the bending strength is remarkably increased, and changing in sizes of the mold is controlled. Therefore it is suitable to forming molds of large size.

In Samples A to E, the influences by the rapid heating and cooling were confirmed by repeating the heating at 800° C for 5 minutes and the cooling to the room temperatures for 5 minutes. As a result, cracks and defects were not found.

V In Samples A and B, the relation between the sintering time (max. 10hr), thickness of the hardened layer and the porosity was investigated under the condition of the constant sintering temperature (900° C). The results are shown in Fig.34. The hardened layer becomes thicker and the porosity becomes lower as the sintering time goes on. From this fact, it is seen that the porosity may be also controlled by the sintering time.

VI Sample A of Table 1 was used, and the casting mold of a part of an automobile (shift fork) was obtained with sizes of L200 x w300 x t50mm under the conditions of the porosity of 20%, compression strength of $850Kg/cm^2$, thickness of the hardened layer of 6 to 8mm. In accordance with JIS B0659, the translation was undertaken with the mold of 3.25, and the data of 3.2 to 6.3S were obtained. From this fact, it is seen that the mold by the invention has the permeability and the close mold face. With respect to Samples B to E, the results were almost equal.

The mold face was washed with graphite alchol solution, and the mold was provided with absorbing pipes at the side, and the other part was applied with filler of sealing or coating, and the mold was incorporated into the casting device as shown in Fig.17. The casting was operated under gravity with aluminium alloy ADC-12, while absorption of 700mmHg was operated via the absorbing pipe. The casting conditions were the casting temperature of 700° C, the casting time of 3 to 5sec. and time of seperating from the model of 15 to 50 sec. Consequently, the molten material flowed smoothly without sinking, and the translation property was remarkably improved in comparison with the simple gravity casting. The product was close in the inner part.

The casting of 1.5mm in thickness was performed. The molten material went to detailed parts, and the cast product of thin thickness without defects was obtained. With respect to the endurance, the mold showed no defects after 70 times of uses.

VII Sample B of Table 1 was used under the conditions of the porosity of 25%, compression strength of $900Kg/cm^2$ and thickness of the hardened layer of 5 to 7mm, and the sintering time of 5hr. The same mold as VI was obtained.

This mold was used, and the casting of Al alloy (ADC-12) was carried out by the low pressure casting of Fig.18, and the absorbing power of 700mmHg was actuated through the pipes of the sides of the movable and stationary mold under the conditions of the liquid temperature of 700° C, pressure of $1.5Kg/cm^2$, casting time of 1 sec, and time of separating from the mold of 15 to 50 sec. As a result, the precision was improved up to the level of the die casting, in addition to the characteristic of the low pressure casting.

VIII Sample C was used, and the vacuum forming mold with the face of the leather embossing pattern was produced under the contions of 900°C x 2hr, sizes of 120L x 120w x 30t(mm), the porosity of 25%, and the thickness of the hardened layer of 3mm.

The forming mold was incorporated into the forming machine as illustrated in Fig.20, and the plastic sheet of ABS (material) and thickness of 0.5mm was subjected to the vacuum forming at the temperature of 90°C. The absorbing part was one at the center of the vacuum forming mold, and the aborbing power was 700mmHg.

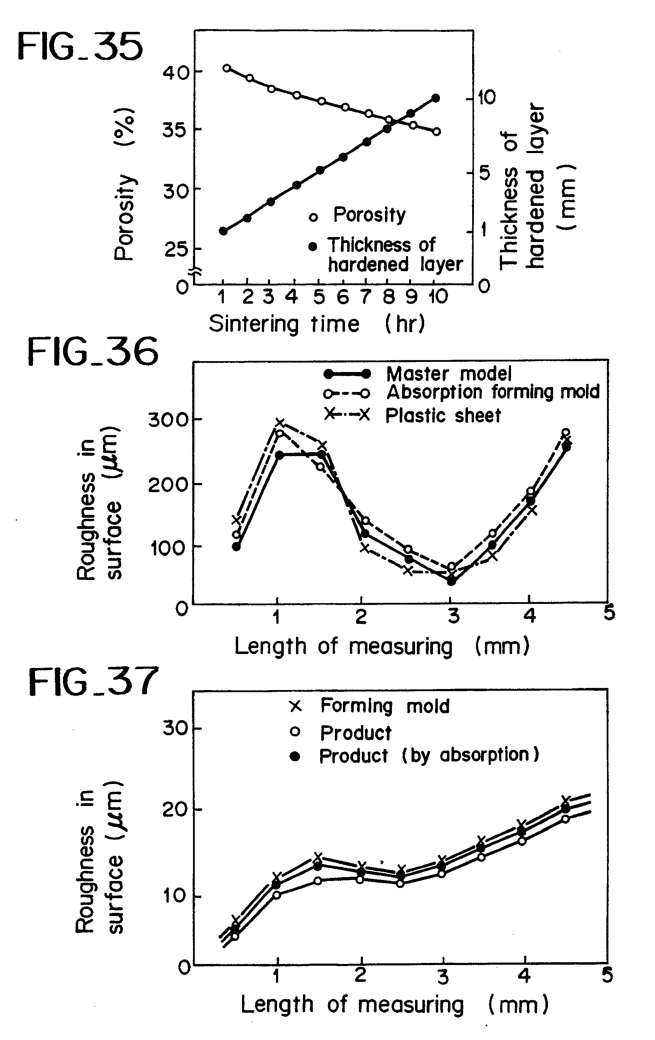

The surface roughness by translating the leather pattern and the surface roughness of the plastic sheet by translation under absorption were compared with the master mold, as shown in Fig.36. Difference in roughness between these three is not found, and excellent translation is provided. This is why the vacuum forming mold depends upon the pouring system, and the adherence is close by the sintering, and the hardened layer with permeability was formed, and the uniform absorbing power was acted over the mold fa ce.

The above mentioned translation property is the same when half-molten plastic rubber is applied to the pressure mold shown in Fig.19, in addition without air holes and burrs, since the low pressure is sufficient.

EXAMPLE 2

I Non ferrous powders were used as the metallic powders, and the permeable and durable forming models were made for tests under the condition of the best ones from Example 1

Table 2

| Samples | Metallic grains (1) | | Ceramic grains (2) | | Binder (3) | Mixing wt ratio | Reinforcing fibers | | |
|---|---|---|---|---|---|---|---|---|---|
| | Materials | Grain dia. (μm) (under) | Materials | Grain dia. (μm) (under) | Material | (1):(2):(3) | Materials | Size L×D | Addition (vol %) |
| J | Carbonyl nickel | 5 | Composite mullite | 100 | Ethyl silicate | 4 : 4 : 1 | – | – | – |
| K | " | 5 | Zircom | 100 | " | 4 : 4 : 1 | – | – | – |
| L | " | 5 | Composite mullite | 100 | " | 4 : 4 : 1 | Glass | 0.5mm × 13μm | 1 to 4 |
| M | Chrom | 20 | Alumina | 50 | " | 5 : 5 : 1 | – | – | – |
| N | Molybden | 10 | silica | 100 | " | 2.5 : 2.5 : 1 | – | – | – |
| O | Manganese | 20 | Composite mullite | 100 | " | 4 : 4 : 1 | – | – | – |
| P | Cupper | 15 | Silica | 150 | Colloidal silica | 3.3 : 3.3 : 1 | Stainless steel | 3.0mm × 60μm | 1 to 4 |

Note 1: Ethyl silicate is alcohol soluble silica sol of $SiO_2$ of 20% density and volatile matter of 80%

Note 2: Colloidal silica is $SiO_2$ of 21% density

Samples J to P were uniformly agitated to make the slurry materials, and the slurry materials were poured into the frames arranged with masters (foreign dishes, vessels, sanitation fixtures, parts of sewing machines). The products were the forming molds of 400 x 400 x 200mm. After removing the solidified molds from the frames, Samples J to L were dried by hot air for 3hr, and Samples M to P were dried by directly subjecting to fire. The sinterings were performed between 900°C and 1500°C in dependence upon the air conditions.

II With respect to the permeable molds J, M, N, O, the relations between the sintering time and the compression strength under the constant sintering temperature (1100°C) are shown in Fig.24. With respect to the permeable molds J and K, the relations between the compression strength and the sintering temperature under the fixed sintering time (6hr) are shown in Fig.26.

From these data, it is seen that the permeable mold by the invention is high in compression strength, and the strength is increased as the sintering time advances and the sintering temperature becomes higher. With respect to the permeable molds L and P, the relation between the sintering temperature and the bending strength under the fixed sintering time (6hr) are shown in Fig.29, and the relation between the amount of adding the fibers and changings of sizes is shown in Fig.31. From these data it is seen that the bending strength is remarkably increased by adding the reinforcing fibers, and the changing in sizes is controlled more than using of the ferrous grains.

It is also seen that the sizing precision is satisfactory when the reinforcing fibers are not added; and is rather excellent in comparison with about 1.6% when manufacturing with the ferrous powders under the same conditions.

III With respect to the permeable molds J to P, the relations between the sintering time, thickness of the hardened layer and porosity (observed) under the constant sintering temperatures (1000°C) are shown in Fig.35.

In this invention, the permeability is more satisfactory than in the case of the ferrous grains in Fig.34, and the mold has the permeablity of more than 20%. When the mold is small sized, the hardened layer goes to the center, and the permeability is at least 20%.

IV The permeable mold L of 35% porosity was used, and endurance tests were made on the slip castings of the dinner wares shown in Figs.22a and 22b.

The slip was the mixture of carion, cray, quartz, feldspar, ceramics, cerben and lime, and is fed under the pressure of 10Kg/cm$^2$ into the conduit so that products of 10 to 12mm were obtained in adhering time of 10 min.

As a result, the porous molds by the invention maintained exact shapes after uses of 20000 cycles, and the same endurance was provided when the casting was carried out under reduction pressure by acting the absorbing power of 700mmHg, and the casting was performed under reduction pressure and the same absorbing power. The products were very close.

In the conventional gypsum molds the using limit is 300 times at best notwithstanding mere natural water absorption. If the absorbing power is used, the upper limit is about 80 times. Therefore the present invention has increased durability. This is why the product by the invention has the high mechanical strength in spite of permeability, well conditioned wear resistance and is not influenced by thermal changes of rapid cooling and heating.

V The permeable product M of 38% porosity was used, and blow forming was performed of plastics (head rest of the automobile). The material was vinyl chloride of parison thickness of 2.5mm, and the blowing pressure was 3Kg/cm$^2$. After having squeezed the frame, the absorbing power of 700mmHg was actuated.

Fig.37 shows the products and the surface roughness, from which it is seen that excellent translation properties were effected. Because, the process depended upon the forming or flowing the material, and the mold face had the satisfactory permeablity as a whole. Herein the foregoing problems were solved that the air remained in the cavity, thereby to lower the translation property, and those problem were invloved around the metal molds.

The same results were brough about in forming the leather embossing patterns by means of the vacuume forming molds of the plastics.

VI The permeable mold N of 35% porosity was used to carry out the casting of pure copper under gravity (thickness 1.3mm x length 20mm), and the absorption of 700mmHg was performed. The casting conditions were the temperature of 950°C, time of 3 to 5 sec and time of separating from the mold of 15 to 50 sec. As a result, the product had the pretty surface without sinking or air porosities around the center. Any defects were not found in the molds after uses of 150 times.

EXAMPLE 3

I The forming mold was produced where the binder had the consuming substance. The aggregates were cast iron grains of less than 100$\mu$m and composite mullite of 100$\mu$m, and the reinforcing fibers were stainless steels of length of 7mm and thickness of 0.19mm. The binder was urethan resin comprising the solution (A) of phenol formaldehyde resin (density of around 50%), the solution (B) of polyisocyanate of aromatic family (density of around 50%) and the basic catalyst. The mixing ratio was cast iron grains : composite mullite : urethan resin = 1.5 : 1.5 : 1, and the solution (A) : solution (B) in the urethan resin was equal, i.e., 0.5. The reinforcing fibers were added 2 vol%.

II The forming process was that the solution (A) and the catalyst were mixed, to which the aggregates were added and kneaded and the solution (B) was added thereto and kneaded to make the slurry material. The slurry material was poured into the frame and hardened by leaving in the air for 1 hr. The formed mold was inserted at 900°C for 2 hr under air condition. The product was 210Kg/cm$^2$ of compression strength and aboud 30% of porosity.

Claims

1. Method of preparing a permeable mould for forming three-dimensional shapes,
   **characterized by**
      a. preparing a mixed slurry containing metallic grains, ceramic grains and a liquid binder having evaporating or consumable contents at weight ratio of (1 to 5) : (1 to 5) : 1;
      b. preparing a predetermined shape of the mould by pouring the slurry in a master form and drying the green mould;
      c. sintering the mould in an oxidizing atmosphere;
      d. forming at least a part of the outer shell of the mould including at least the forming surface (11) as a hardened and close layer scattered with sintered ceramic and metallic oxides;
      e. providing said hardened layer with fine and numberless vents (22) by removing said evaporating or consumable contents of the liquid binder;
      f. thereby obtaining a mould with a porosity of 5 to 60% and a compression strength of more than 100 kg/cm$^2$.

2. Method according to claim 1,
   **characterized in**, that
   reinforcing fibers are added to the slurry in an amount of 1 to 20 vol.-%.

3. Method according to claims 1 and/or 2,
   **characterized in**, that
   the liquid binder is alcohol soluble silica sol.

4. Method according to claims 1 to 3,
   **characterized in**, that
   the mould is fitted in a box (180) or a frame (33) having absorption passages (181, 18).

5. Permeable mould fabricated by the process according to the preceeding claims 1 to 4 having a forming surface of predetermined shape being composed of metallic grains and ceramic grains,
   **characterized in**, that
   the body (1) of the mould has a close or dense hardened layer (2) including at least said forming surface (11), said hardened layer (2) having fine vents (22) generated by the penetration of evaporating or consumable subtances contained in the binder mixed to the aggregates, said body (1) of the mould having a porosity of 5 to 60 % and a compression strength of more than 100 kg /cm$^2$ by using a mixing weight ratio of metallic grains, ceramic grains and binder of (1 to 5) : (1 to 5) : 1 in the initial slurry.

**Revendications**

1. Procédé de préparation d'un moule perméable pour constituer des forces tridensionnelles,
   **caractérisé par**
      a. la préparation d'une boue mélangée contenant des grains métalliques, des grains céramiques et un liant liquide comportant un contenu s'évaporant ou consommable selon un rapport en poids de (1 à 5): (1 à 5):1;
      b. la préparation d'une forme déterminée du moule en coulant la boue dans une forme mère et en séchant le moule obtenu;
      c. le frittage du moule dans une atmosphère oxydante;
      d. la constitution au moins d'une partie de l'enveloppe extérieure du moule comprenant au moins la surface de moulage (11) en tant que couche durcie et fine où sont dispersés des céramiques et des oxydes métalliques frittés;
      e. la constitution dans ladite couche durcie d'orifices fins et innombrables (22) en enlevant lesdits contenus s'évaporant consommables du liant liquide;
      f. l'obtention de cette manière d'un moule d'une porosité de 5 à 60% et d'une résistance à la compression supérieure à 100 kg/cm$^2$.

2. Procédé selon la revendication 1,
   **caractérisé en ce que**
   des fibres d'armature sont ajoutées à la boue en portion de 1 à 20 vol.%.

3. Procédé selon la revendication 1 et/ou 2,
**caractérisé en ce que**
le liant liquide est un sol de silice soluble dans l'alcool.

4. Procédé selon l'une des revendications 1 à 3,
**caractérisé en ce que**
le moule est placé dans une boite (180) ou un cadre (33) présentant des passages d'absorption (181, 18).

5. Moule perméable fabriqué par un procédé conforme à l'une des revendications précédentes 1 à 4, comportant une surface de moulage d'une forme prédéterminée composée de grains métalliques et de grains céramiques,
**caractérisé en ce que**
le corps (1) du moule comporte une couche fine ou dense durcie (2) comprenant au moins ladite surface de moulage (11), ladite couche durcie (2) présentant de fins orifices (22) engendrés par la pénétration de substances s'évaporant ou consommables contenues dans le liant mélangé aux agrégats, ledit corps (1) du moule présentant une porosité de 5 à 60% et une résistance à la compression supérieure à 100 kg/cm$^2$ en utilisant un rapport de mélange en poids de grains métalliques, grains céramiques et liant de (1 à 5): (1 à 5): 1 dans la boue initiale.

**Ansprüche**

1. Verfahren zum Herstellen einer durchlässigen Form zum Bilden von dreidimensionalen Formlingen,
**gekennzeichnet durch**
a. Herstellen einer gemischten Schlämme, die metallische Körner, keramische Körner und ein flüssiges Bindemittel mit einem verdampfenden oder verbrauchbaren Bestandteil mit einem Gewichtsverhältnis von (1 bis 5) : (1 bis 5) : 1 enthält;
b. Herstellen einer vorgegebenen Gestalt der Form durch Gießen der Schlämme in eine Originalform und Trocknen der rohen Form;
c. Sintern der Form in einer oxidierenden Atmosphäre;
d. Ausbilden von mindestens einem Teil der äußeren Schale der Form, der mindestens die formgebende Oberfläche (11) enthält, als gehärtete und dichte Schicht, in der gesinterte keramische und metallische Oxide verteilt sind;
e. Versehen der gehärteten Schicht mit feinen und zahllosen Öffnungen (22) durch Entfernen des verdampfenden oder verbrauchbaren Bestandteils des flüssigen Bindemittels;
f. wodurch eine Form mit einer Porosität von 5 bis 60% und einer Druckfestigkeit von mehr als 100 kg/cm$^2$ erhalten wird.

2. Verfahren nach Anspruch 1, **dadurch gekennzeichnet**, daß verstärkende Fasern der Schlämme in einer Menge von 1 bis 20 Vol.-% zugegeben werden.

3. Verfahren nach Anspruch 1 und/oder 2, **dadurch gekennzeichnet**, daß das flüssige Bindemittel ein alkohollösliches Kieselerdesol ist.

4. Verfahren nach einem der Ansprüche 1 bis 3, **dadurch gekennzeichnet**, daß die Form in einen Behälter (180) oder einen Rahmen (33) mit Absorptionsdurchgängen (181, 18) eingepaßt ist.

5. Durchlässige Form, die durch das Verfahren gemäß einem der vorhergehenden Ansprüche 1 bis 4 hergestellt ist, mit einer aus metallischen Körnern und keramischen Körnern zusammengesetzten formgebenden Oberfläche vorgegebener Gestalt,
**dadurch gekennzeichnet,**
daß der Körper (1) der Form eine geschlossene oder dichte, mindestens die formgebende Oberfläche (11) enthaltende gehärtete Schicht (2) aufweist, wobei die gehärtete Schicht (2) durch das Eindringen von in dem dem Gemenge beigemischten Bindemittel enthaltenen verdampfenden oder verbrauchbaren Substanzen erzeugte feine Öffnungen (22) aufweist, und der Körper (1) der Form eine Porosität von 5 bis 60 % und eine Druckfestigkeit von mehr als 100 kg/cm$^2$ hat, indem ein Mischungsgewichtsverhältnis von metallischen Körnern, keramischen Körnern und Bindemittel von (1-5) : (1-5) : 1 in der ursprünglichen Schlämme angewendet wird.

# FIG_1

# FIG_2

# FIG_4

# FIG_3

# FIG_5(a)

# FIG_5(b)

18

# FIG_6

# FIG_7

# FIG_8

# FIG_9

# FIG _10

10a

3      11      2

11

16   17   2

10b

# FIG _11

10a

2      2

181

181

180

11      18

180      11

18

10b

# FIG _13

5

6      7

# FIG _12

10a   11   19   3   4   2      18

12

18

10b

4      11   4   19   2   3

20

# FIG_14

# FIG_15(a)

# FIG_15(b)

# FIG_16

# FIG_17

# FIG_18

FIG_19

FIG_20

FIG_21(a)

FIG_21(b)   FIG_21(c)   FIG_21(d)

23

FIG_22(a)

FIG_22(b)

FIG_23

FIG_24

## FIG_25

## FIG_26

## FIG_27

Increase of weight (g) vs Sintering time (h)

## FIG_28

Bending strength (kg/cm²) vs Addition amount of fabrics (Vol %)

## FIG_29

x — P
o — L

Bending strength (kg/cm²) vs Sintering temperature (°C)

## FIG_30

Changing amount of sizes (%) vs Addition amount of fabrics (Vol %)

## FIG_31

Changing amount of sizes (%) vs Addition amount of fabrics (Vol %)

# FIG_32

# FIG_33

# FIG_34

FIG. 35

FIG. 36

FIG. 37